(19) Europäisches Patentamt
European Patent Office
Office européen des brevets

(11) EP 0 970 993 A1

(12) # EUROPÄISCHE PATENTANMELDUNG

(43) Veröffentlichungstag:
**12.01.2000 Patentblatt 2000/02**

(51) Int. Cl.[7]: **C08L 57/12**, C08J 7/04, C09D 157/12, C08J 9/36

(21) Anmeldenummer: **99113156.6**

(22) Anmeldetag: **07.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **08.07.1998 DE 19830555**

(71) Anmelder:
**BASF AKTIENGESELLSCHAFT**
**67056 Ludwigshafen (DE)**

(72) Erfinder:
- **Zhao, Cheng-Li**
  **68723 Schwetzingen (DE)**
- **Wistuba, Eckehardt**
  **67098 Bad Dürkheim (DE)**
- **Baumstark, Roland**
  **67434 Neustadt (DE)**
- **Wildburg, Gerald**
  **67071 Ludwigshafen (DE)**

(74) Vertreter:
**Kinzebach, Werner, Dr. et al**
**Ludwigsplatz 4**
**67059 Ludwigshafen (DE)**

(54) **Wässrige Polymerzubereitungen**

(57) Die vorliegende Erfindung betrifft wässrige Zubereitungen, enthaltend:

i) wenigstens ein filmbildendes Polymer A, aufgebaut aus ethylenisch ungesättigten Monomeren M, das in der wässrigen Zubereitung in dispers verteilter Form vorliegt, wobei die Monomere M wenigstens ein monoethylenisch ungesättigtes Monomer M1 der allgemeinen Formel I

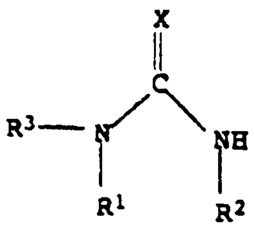

(I)

worin X, $R^1$, $R^2$ und $R^3$ die in Anspruch 1 angegebenen Bedeutungen besitzen

ii) wenigstens eine Verbindung B, die zwei oder mehrere Aldehydgruppen aufweist,

für die Beschichtung von Substraten auf der Basis von Polyurethanen.

EP 0 970 993 A1

## Beschreibung

Die vorliegende Erfindung betrifft die Verwendung wässriger Polymerzubereitungen, die ein filmbildendes Polymer A in Form seiner wässrigen Dispersion enthalten, für die Beschichtung polyurethanhaltiger Substrate.

Wässrige Zubereitungen auf Basis filmbildender Polymere werden häufig als Beschichtungssysteme für den Schutz von Oberflächen verwendet. Das in der Zubereitung enthaltene Polymer bildet zusammen mit den in der Zubereitung gegebenenfalls enthaltenen Füllstoffen oder Pigmenten beim Trocknen einen festen Polymerfilm, der das beschichtete Substrat vor Umwelteinflüssen wie Sonnenlicht, Feuchtigkeit, chemischen oder mechanischen Belastungen schützt.

Im Bautenschutz, insbesondere bei Außenanwendungen, werden an die Stabilität derartiger Beschichtungen hohe Anforderungen gestellt. Neben chemischer Resistenz und einer hohen Photostabilität müssen sie eine hohe Elastizität und eine hohe Reißfestigkeit aufweisen, damit sich bei den durch Temperaturschwankungen hervorgerufenen Dimensionsänderungen der Bauteile in der Beschichtung keine Risse bilden. Zudem dürfen die Beschichtungen bei hohen Temperaturen nicht klebrig werden, da dies unerwünschte Anschmutzeffekte zur Folge hätte. Ferner sollten die Beschichtungen nur eine geringe Neigung zur Aufnahme von Wasser aufweisen.

Von besonderer Bedeutung ist die gute Haftung der Beschichtungen auf dem zu versiegelnden Untergrund bzw. auf der Oberfläche des zu beschichtenden Substrats. Zubereitungen auf Basis wässriger Polymerdispersionen erfüllen dieses Erfordernis häufig nicht bei hydrophoben Substraten, die im wesentlichen aus Polyurethanen bestehen (Polyurethanmassen), z.b. bei Polyurethanschäumen, auch wenn die Beschichtungen den sonstigen an sie gestellten Anforderungen entsprechen. Andererseits finden im Bauwesen insbesondere Polyurethanmassen als Konstruktionsmaterialien, z.B. Polyurethanschäume bei der Isolierung von Flachdachkonstruktionen, breite Verwendung.

Aus der WO 95/09896 und der EP-A 609 793 sind wässrige Polymerzubereitungen bekannt, die wenigstens ein Polymer mit Harnstoffgruppen in Form einer wässrigen Dispersion und wenigstens eine Polyaldehydverbindung enthalten. Die Verwendung derartiger Zubereitungen als Bindemittel für Dispersionsfarben wird beschrieben.

Die EP-B 258 988 beschreibt eine Beschichtungsmasse für Polyurethanschäume, die ein filmbildendes Polymer enthält, welches Acetoacetyl- oder Cyanoacetyl-Gruppen aufweist. Die Beschichtungsmasse zeichnet sich durch hohe Haftung auf Oberflächen von Polyurethanschäumen aus. Während die Reißfestigkeit derartiger Bindemittelpolymerisate durch Einbau der funktionellen Gruppen erhöht wird, ist jedoch gleichzeitig eine merkliche Verringerung der Elastizität dieser Beschichtungen, so daß die Gefahr von Rißbildungen in der Beschichtung besteht.

Aus der WO 98/16589 ist die Verwendung von Polymerzubereitungen für die Beschichtung hydrophober Oberflächen bekannt, die ein Polymer mit Keto- oder Aldehydgruppen und wenigstens eine Verbindung mit zwei oder mehreren, primären Aminogruppen, beispielsweise das Dihydrazid einer Dicarbonsäure, enthalten. Die Beschichtungen zeichnen sich durch eine hohe Elastizität und Reißfestigkeit aus.

Der vorliegenden Erfindung liegt somit die Aufgabe zugrunde, eine zubereitung auf Basis einer wässrigen Polymerdispersion (wässrige Polymerzubereitung) bereitzustellen, die in hohem Maße das an Beschichtungsmassen gestellte Anforderungsprofil erfüllt und die auf Beschichtungen von Substraten, die im wesentlichen aus Polyurethanen bestehen, gut haften.

Es wurde überraschenderweise gefunden, daß wässrige Polymerzubereitungen, die wenigstens ein filmbildendes Polymer A mit Harnstoff- oder Thioharnstoffgruppen und wenigstens eine Verbindung B mit wenigstens zwei Aldehydgruppen enthalten, das an Beschichtungsmassen gestellte Anforderungsprofil in hohem Maße erfüllen und insbesondere zu Beschichtungen mit einer sehr guten Haftung auf der Oberfläche von Polyurethanhaltigen Substraten führen.

Die vorliegende Erfindung betrifft somit die Verwendung von wässrigen Zubereitungen, enthaltend:

i) wenigstens ein filmbildendes Polymer A, aufgebaut aus ethylenisch ungesättigten Monomeren M, das in der wässrigen Zubereitung in dispers verteilter Form vorliegt, wobei die Monomere M wenigstens ein Monomer M1 der allgemeinen Formel I

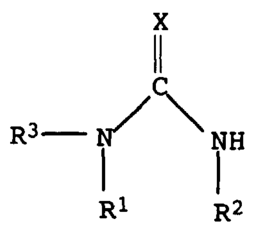

(I)

worin

$R^1$ und $R^2$ unabhängig voneinander für Wasserstoff, lineares oder verzweigtes $C_1$-$C_5$-Alkyl stehen oder gemeinsam eine $C_2$-$C_4$-Alkylengruppe bedeuten, die gegebenenfalls ein- oder zweifach mit $C_1$-$C_5$-Alkyl, $C_1$-$C_4$-Alkyloxy und/oder Hydroxy substituiert ist,

X für Sauerstoff oder Schwefel steht, und
$R^3$ für einen monoethylenisch ungesättigten Rest mit 2 bis 20 C-Atomen steht,

und wenigstens ein damit copolymerisierbares Monomer M2 umfassen, und

ii) wenigstens eine Verbindung B, die zwei oder mehrere Aldehydgruppen aufweist,

für die Beschichtung von Substraten, die im wesentlichen aus Polynrethanen bestehen.

Substrate, die im wesentlichen aus Polyurethanen bestehen (Polyurethanmassen), umfassen Formkörper, Formmassen oder Bauteile aus Polyurethanen, Beschichtungen, Streichmassen auf der Basis von Polyurethanen und feste Polyurethanschäume, z.B. in Form von Konstruktionsplatten oder Isolierschäumen. Sie enthalten in der Regel wenigstens 50 Gew.-%, bezogen auf ihre Gesamtmasse, Polyurethane, z.B. Polyesterurethane und/oder Polyetherurethane. Polyurethanhaltige Substrate weisen in der Regel Oberflächen mit besonders niedriger Oberflächenspannung, in der Regel < 50 mN/m, vorzugsweise < 40 mN/m und insbesondere < 30 mN/m und geringer Polarität auf, auf denen übliche Beschichtungsmassen nur schlecht oder gar nicht haften. Besonders geeignet sind die erfindungsgemäßen Zubereitung für die Beschichtung der Oberflächen von Polyurethanschäumen, beispielsweise für Polyurethanschäume, im Flachdachbau als Konstruktionsteile oder Isoliermassen Verwendung finden. Eine Zusammenstellung typischer Polyurethanschäume findet sich beispielsweise in A. Franck, Kunststoffkompendium, 4. Auflage, Vogel Verlag, Würzburg 1996, S. 393-406, insbesondere Tabelle 8.4.1.

Bevorzugte Monomere M1 sind:

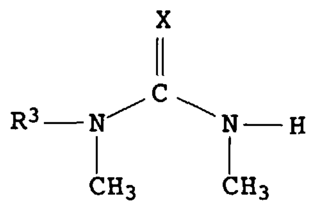

(Ia)

sowie

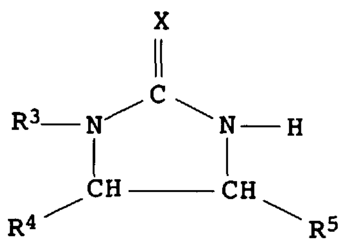

(Ib)

wobei $R^3$ die vorgenannte Bedeutung hat und jeder der Substituenten $R^4$, $R^5$ in Formel Ib für Wasserstoff, eine Hydroxylgruppe oder eine $C_1$- bis $C_4$-Alkyloxygruppe stehen kann. Vorzugsweise stehen $R^4$ und $R^5$ beide gleichzeitig für Wasserstoff oder $R^4$ für Wasserstoff und $R^5$ für eine $C_1$- bis $C_4$-Alkyloxygruppe.

Bevorzugt sind Monomere M1 der allgemeinen Formel I, worin X für Sauerstoff steht.

$R^3$ steht in der Regel für einen monoethylenisch ungesättigten Rest mit 2 bis 20 C-Atomen. $R^3$ steht vorzugsweise für Reste der allgemeinen Formeln:

$$CH_2=CH\text{-}X\text{-}Y\text{-}, \text{ oder } CH_2=C(CH_3)\text{-}X\text{-}Y\text{-}$$

worin x für eine Einfachbindung, $CH_2$, eine Phenylengruppe, eine Carbonylgruppe, eine Carbonyloxygruppe oder eine Carbamoylgruppe steht und Y eine Einfachbindung oder eine $C_1$-$C_{10}$-Alkylengruppe bedeutet, die gegebenenfalls mit Hydroxyl- und oder Carbonylgruppen substituiert ist und/oder durch ein oder mehrere, nicht benachbarte Sauerstoffatome oder Iminogruppen unterbrochen ist.

Beispiele für geeignete Reste $R^3$ sind:

$CH_2$=CH-, $CH_2$=CH-$CH_2$-, $CH_2$=CH-$CH_2$-O-$CH_2$-CH(OH)-$CH_2$-,
$CH_2$=CH-$CH_2$-O-$CH_2$-CH(OH)-$CH_2$-NH-$CH_2$-$CH_2$-
$CH_2$=CH-$CH_2$-O-$CH_2$-CH(OH)-$CH_2$-O-$CH_2$-$CH_2$-
$CH_2$=C($CH_3$)-$CH_2$-, $CH_2$=C($CH_3$)-C(O)-, $CH_2$=CH-C(O)-
$CH_2$=CH-C(O)-O-$CH_2$-$CH_2$-, $CH_2$=CH-C(O)-NH-$CH_2$-$CH_2$-,
$CH_2$=C($CH_3$)-C(O)-O-$CH_2$-$CH_2$-, $CH_2$=C($CH_3$)-C(O)-NH-$CH_2$-$CH_2$-,
$CH_2$=CH-C(O)-O-$CH_2$-C(O)-O-$CH_2$-$CH_2$-,
$CH_2$=CH-C(O)-O-$CH_2$-C(O)-NH-$CH_2$-$CH_2$-
$CH_2$=CH-C(O)-NH-$CH_2$-C(O)-O-$CH_2$-$CH_2$-,
$CH_2$=C($CH_3$)-C(O)-O-$CH_2$-C(O)-O-$CH_2$-$CH_2$-,
$CH_2$=C($CH_3$)-C(O)-O-$CH_2$-C(O)-NH-$CH_2$-$CH_2$-
$CH_2$=C($CH_3$)-C(O)-NH-$CH_2$-C(O)-O-$CH_2$-$CH_2$-,

Als günstige copolymerisierbare Monomere M1 seien genannt: N-Vinylethylenharnstotf, N-[(Methacryloyloxyacetoxyethyl)]ethylenharnstoff, N-(2-Acryloyloxyethyl)ethylenharnstoff, N-[(3-Allyloxy-2-hydroxypropyl)aminoethyl]ethylenharnstoff, N-(Acrylamidoethyl)ethylenharnstoff, N-Allylethylenharnstoff, N-(2-Methacryloyloxyacetamidoethyl)ethylenharnstoff, sowie insbesondere N-(2-Methacryloyloxyethyl)ethylenharnstoff (auch [1-(2-methacryloyloxyethyl)imidazolin-2-on] genannt), N-(Methacrylamidoethyl)ethylenharnstoff und N-[(3-Allyloxy-2-hydroxypropyl)aminoethyl]ethylenharnstoff.

Geeignete Monomere M1 werden weiterhin in den US 3,356,627, US 4,104,220, US 4,111,877, US 4,219,454, US 4,319,032, US 4,500,673, US 4,426,503, US 5,210,199, US 5,498,723, US 5,567,826, EP-A 3870, EP-A 9880, EP-A 29 891, EP-A 379 892 und WO 91/12243 beschrieben. Weitere geeignete Monomere M1 werden in einem Übersichtsartikel von R.W. Kreis und A.M. Sherman, Developments in "Ureido Functional Monomer tor Promoting Wet Adhesion in Latex Paints, Water-Borne and Higher-Solids Coating Symposium vom 03.-05.02.1988, New Orleans, Louisiana", genannt.

Die genannten Monomere M1 machen üblicherweise 0,1 bis 10 Gew.-%, vorzugsweise 0,2 bis 5 Gew.-% und insbesondere 0,5 bis 4 Gew.-%, der Gesamtmenge der Monomere M aus.

Neben den Monomeren M1 umfassen die Monomere M wenigstens ein Monomer M2 mit einer begrenzten Wasserlöslichkeit (d. h. < 60 g/l bei 25 °C; sog. hydrophobe Monomere) das mit dem Monomer M1 copolymerisierbar ist und das die Filmbildung des Polymeren A gewährleistet. Monomere M2 sind in der Regel ausgewählt unter vinylaromatischen Monomeren wie Styrol, α-Methylstyrol, ortho-Chlorstyrol oder Vinyltoluole, Vinylestern von $C_1$-$C_{18}$-, vorzugsweise $C_1$-$C_{12}$-Monocarbonsäuren, wie Vinylacetat, Vinylpropionat, Vinylbutyrat, Vinylvalerat, Vinylhexanoat, Vinyl-2-ethylhexanoat, Vinyldecanoat, Vinyllaurat, Vinylstearat und Vinylester der Versatic®-Säuren (Versatic®-Säuren sind verzweigte, aliphatische Carbonsäuren mit 5 bis 11 C-Atomen). Weiterhin kommen Ester α,β-ethylenisch ungesättigter $C_3$-$C_8$-Mono- oder Dicarbonsäuren mit vorzugsweise $C_1$-$C_{12}$- und insbesondere $C_1$-$C_8$-Alkanolen oder $C_5$-$C_8$-Cycloalkanolen in Frage. Geeignete $C_1$-$C_{12}$-Alkanole sind beispielsweise Methanol, Ethanol, n-Propanol, i-Propanol, 1-Butanol, 2-Butanol, Isobutanol, tert.-Butanol, n-Hexanol und 2-Ethylhexanol. Geeignete Cycloalkanole sind beispielsweise Cyclopentanol oder Cyclohexanol. Beipielse sind Ester der Acrylsäure, der Methacrylsäure, der Crotonsäure, der Maleinsäure, der Itaconsäure oder der Fumarsäure wie (Meth)acrylsäuremethylester, (Meth)acrylsäureethylester, (Meth)acrylsäureisopropylester, (Meth)acrylsäure-n-butylester, (Meth)acrylsäureisobutylester, (Meth)acrylsäure-1-hexylester, (Meth)acrylsäure-tert.-butylester, (Meth)acrylsäure-2-ethylhexylester, Maleinsäuredimethylester oder Maleinsäuredi-n-butylester. Darüber hinaus können auch $C_4$-$C_8$-konjugierte Diene, wie 1,3-Butadien, Isopren oder Chloropren, $C_2$-$C_6$-Olefine, wie Ethylen, Propen, 1-Buten und Isobuten, oder Vinylchlorid als Monomere M2 eingesetzt werden. Die Monomere M2 machen vorzugsweise 80 bis 99,9 Gew.-%, insbesondere 90 bis 99,9 Gew.-% und speziell 95 bis 99,5 Gew.-%, bezogen auf das Gesamtgewicht der Monomere M aus.

Bevorzugte Monomere M2 sind die vinylaromatischen Monomere, insbesondere Styrol und die Ester der Acrylsäure und der Methacrylsäure mit $C_1$-$C_{12}$-Alkanolen. Eine besonders bevorzugte Ausführungsform der vorliegenden Erfindung betrifft insbesondere die Verwendung von solchen Polymeren A, die als Monomere M2 ausschließlich die vorgenannten Ester der Acrylsäure und der Methacrylsäure mit $C_1$-$C_{12}$-Alkanolen einpolymerisiert enthalten.

Ferner umfassen die Monomere M in der Regel auch von den Monomeren M1 und M2 verschiedene Monomere M3, die eine Säurefunktion aufweisen, oder deren Salze. Diese Monomere werden vorzugsweise in Mengen von 0,1 bis 10 Gew.-% und insbesondere 0,2 bis 5 Gew.-%, bezogen auf die Gesamtmonomermenge, mit einpolymerisiert. Zu den Monomeren M3 zählen beispielsweise α,β-monoethylenische ungesättigte Mono- und Dicarbonsäuren mit 3 bis 10 C-Atomen, ethylenisch ungesättigte Sulfonsäuren, ethylenisch ungesättigte Phosphonsäuren oder Dihydrogenphosphate und deren wasserlösliche Salze, z.B. deren Natriumsalze. Bevorzugte Monomere M3 sind ethylenisch unge-

sättigten $C_3$-$C_8$-Carbonsäuren und $C_4$-$C_8$-Dicarbonsäuren, z. B. Itaconsäure, Crotonsäure, Vinylessigsäure, Acrylamidoglykolsäure und insbesondere Acrylsäure und Methacrylsäure.

Die Monomere M umfassen häufig auch neutrale bzw. nichtionische, modifizierende Monomere M4, die eine erhöhte Wasserlöslichkeit, d. h. > 60 g/l bei 25 °C und 1 bar aufweisen und die von den Monomeren M1 und M3 verschieden sind. Beispiele für Monomere M4 sind die Amide oder die N-Alkylolamide der genannten Carbonsäuren, beispielsweise Acrylamid, Methacrylamid, N-Methylolacrylamid und N-Methylolmethacrylamid, die Hydroxyalkylester der vorgenannten ethylenisch ungesättigten Carbonsäuren wie Hydroxyethylacrylat, Hydroxyethylmethacrylat, Hydroxypropylacrylat und Hydroxypropylmethacrylat. Weiterhin kommen als Monomere M4 ethylenisch ungesättigte Nitrile wie Acrylnitril oder Methacrylnitril in Betracht. Die Monomere M können Monomere M4 in Mengen bis zu 20 Gew.-%, im Falle der von den vorgenannten Nitrilen verschiedenen Monomere M4 in Mengen von bis zu 10 Gew.-%, und vorzugsweise bis zu 5 Gew.-% umfassen.

Die Monomere M können bis zu 1 Gew.-% Siloxangruppen enthaltende Monomere (Monomere M5) umfassen, z.b. Vinyltrialkoxysilane, wie Vinyltrimethoxysilan, Alkylvinyldialkoxysilane oder (Meth)acryloxyalkyltrialkoxysilane, z. B. (Meth)acryloxyethyltrimethoxysilan, (Meth)acryloxypropyltrimethoxysilan.

Weiterhin können die Monomere M auch bifunktionelle Monomere M6 umfassen. Diese werden, sofern erwünscht, in untergeordneter Menge, in der Regel 0,1 bis 5 Gew.-% und insbesondere nicht mehr als 1 Gew.-%, bezogen auf die Gesamtmonomermenge M, eingesetzt. Die Monomere M6 weisen in der Regel zwei nicht-konjugierte, ethylenisch ungesättigte Bindungen auf: Beispiele für Monomere M6 sind die Diester zweiwertiger Alkohole mit α,β-monoethylenischen ungesättigten $C_3$-$C_8$-Carbonsäuren, z. B. Glykolbisacrylat oder Ester von α,β-ungesättigten Carbonsäuren mit Alkenolen, z. B. Bicyclodecenyl(meth)acrylat. Bevorzugte Polymere A enthalten keine Monomere M6 einpolymerisiert.

Weiterhin hängt die Eigenschaft der erfindungsgemäßen Polymerzubereitungen von der Glasübergangstemperatur (DSC, midpoint temperature, ASTM D 3418-82) des Polymers A ab. Wichtig ist die Glasübergangstemperatur für die Filmbildung des Polymeren A. In der Regel liegt die Mindestfilmbildetemperatur eines Polymeren (in wässriger Dispersion) etwas unterhalb seiner Glasübergangstemperatur. Die Mindestfilmbildetemperatur ist die Temperatur unterhalb derer eine wässrige Polymerdispersion beim Trocknen keinen klaren Polymerfilm mehr bildet. Liegt sie zu hoch, weist die Beschichtungsmasse keine ausreichende Festigkeit auf und verliert ihre Elastizität bei tiefen Temperaturen. Ist sie zu niedrig, bleibt die Beschichtung auch nach dem Aushärten klebrig. Die Glasübergangstemperatur der in Frage kommenden Polymere A liegt daher in der Regel unterhalb 50°C, vorzugsweise unterhalb 20°C und besonders bevorzugt unterhalb 10°C. Im allgemeinen liegt sie jedoch oberhalb -60°C, vorzugsweise oberhalb -40°C und insbesondere oberhalb -35°C. In einer speziellen Ausführungsform der vorliegenden Erfindung weist das Polymer A eine Glasübergangstemperatur von -30°C bis unterhalb von -10°C auf. Hierbei erweist es sich als hilfreich, die Glasübergangstemperatur $T_G$ des dispergierten Polymers P abzuschätzen. Nach Fox (T.G. Fox, Bull. Am. Phys. Soc. (Ser. II) 1, 123 [1956] und Ullmanns Encyklopädie der technischen Chemie, 4. Auflage, Band 19, weinheim (1980), S. 17, 18) gilt für die Glasübergangstemperatur von Mischpolymerisaten bei großen Molmassen in guter Nährung

$$\frac{1}{T_g} = \frac{X^1}{T_g^{\ 1}} + \frac{X^2}{T_g^{\ 2}} + \cdots\cdots \frac{X^n}{T_g^{\ n}}$$

wobei $X^1$, $X^2$, ..., $X^n$ die Massenbrüche der Monomeren 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z.B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Aus dem Gesagten wird deutlich, dass die Glasübergangstemperatur des Polymers A sowohl durch Wahl eines geeigneten Hauptmonomers M2, das eine Glasübergangstemperatur im gewünschten Bereich aufweist, als auch durch Kombination wenigstens eines Monomers M2a mit hoher Glasübergangstemperatur und wenigstens eines Monomers M2b mit niedriger Glasübergangstemperatur eingestellt werden kann, wobei letztere Vorgehensweise bevorzugt ist.

In einer bevorzugten Ausführungsform der vorliegenden Erfindung umfassen die das Polymer A konstituierenden Monomere M wenigstens ein Monomer M2a, dessen Homopolymerisat im Grenzfall einer sehr hohen (unendlichen) Molmasse eine Glasübergangstemperatur $T_g \geq 30$°C, typischerweise $\geq 70$°C aufweist, und wenigstens ein Monomer M2b, dessen Homopolymerisat eine Glasübergangstemperatur $T_g < 20$ °C aufweist. Für diesen Zweck geeignete Monomere M2a sind beispielsweise Styrol, α-Methylstyrol, Methylmethacrylat, Ethylmethacrylat, n- und iso-Propylmethacrylat, n-, iso- und tert.-Butylmethacrylat, tert.-Butylacrylat und Vinylacetat, und gegebenenfalls zusätzlich Acrylnitril und Methacrylnitril, wobei die beiden Nitrile vorzugsweise nicht mehr als 30 Gew.-% der Monomere M2a ausmachen. Für diesen Zweck geeignete Monomere M2b sind z. B. die $C_1$-$C_{12}$-Alkylacrylate, Butadien, Vinylversatate, ins-

besondere Ethylacrylat, n-Butylacrylat und 2-Ethylhexylacrylat. Besonders bevorzugt werden Monomerkombinationen M2a/M2b, die Styrol und/oder Methylmethacrylat sowie n-Butylacrylat und gegebenenfalls 2-Ethylhexylacrylat umfassen. In den erfindungsgemäßen Zubereitungen sind vorzugsweise weniger als 50 Gew.-% der Monomere M2 ausgewählt unter den Monomeren M2a und mehr als 50 Gew.-% unter den Monomeren M2b.

In einer besonders bevorzugten Ausführungsform der vorliegenden Erfindung ist das Polymer A aufgebaut aus:

i) 5 bis 25 Gew.-%, vorzugsweise 10 bis 20 Gew.-% Styrol, Methylmethacrylat, tert.-Butylmethacrylat und deren Mischungen, speziell Methylmethacrylat als alleiniges Monomer M2a,
ii) 70 bis 94,8 Gew.-%, vorzugsweise 80 bis 90 Gew.-% n-Butylacrylat, 2-Ethylhexylacrylat und deren Mischungen,
iii) 0,1 bis 5 Gew.-%, vorzugsweise 0,5 bis 4 Gew.-%, wenigstens eines Monomers M1, das insbesondere ausgewählt ist unter N-(2-Methacryloyloxyethyl)imidazolin-2-on, N-(2-Methacrylamidoethyl)imidazolin-2-on und N-[(3-Allyloxy-2-hydroxypropyl)aminoethyl]imidazolin-2-on
iv) 0,1 bis 5 Gew.-%, vorzugsweise 0,5 bis 4 Gew.-% wenigstens eines Monomers M3, vorzugsweise einer ethylenisch ungesättigten Carbonsäure und insbesondere Acrylsäure und/oder Methacrylsäure,

wobei sich die Gewichtsteile der Monomere M1, M2a, M2b und M3 zu 100 Gew.-% addieren.

Derartige Polymere A sind insbesondere für erfindungsgemäße Zubereitungen geeignet, die als flexible Beschichtungsmassen für Isolierschichten und Bauelemente aus Polyurethanschaum, beispielsweise im Flachdachbau, zur Anwendung kommen.

Die Herstellung der erfindungsgemäßen Polymere A erfolgt in der Regel durch radikalische wässrige Emulsionspolymerisation der vorgenannten Monomere nach bekannten Verfahren.

Als radikalische Polymerisationsinitiatoren kommen grundsätzlich sowohl Peroxide, z. B. Wasserstoffperoxid, organische Peroxide und Hydroperoxide wie Dibenzoylperoxid und tert.-Butylhydroperoxid, Persäuren wie Peroxopivalat, Alkalimetall- und Ammoniumperoxodisulfate wie Natriumperoxodisulfat oder Ammoniumperoxodisulfat als auch Azoverbindungen in Betracht. Geeignet sind auch Redoxinitiatorsysteme, die aus wenigstens einem organischen Reduktionsmittel und wenigstens einem Peroxid, einem Hydroperoxid oder einer Persäure zusammengesetzt sind. Als Reduktionsmittel kommen insbesondere Schwefelverbindungen wie das Natriumsalz der Hydroxymethansulfinsäure, Natriumsulfit, Natriumdisulfit, Natriumthiosulfat oder Acetonbisulfit-Addukt, Stickstoff enthaltende Verbindungen wie Triethylamin, Hydrazin und Hydroxylamin, weiterhin Ascorbinsäure, Glykolsäure und Weinsäure in Frage. Bevorzugt werden solche Initiatorsysteme, die eine geringe Menge einer im Polymerisationsmedium löslichen Metallverbindung enthalten, deren metallische Komponente in mehreren Wertigkeitsstufen auftreten kann, z. B. Vanadiumsulfat, Eisen(II)sulfat oder Eisenkomplexe, z.B den Komplex aus Eisen mit Ethylendiamintetraessigsäure (als Natriumsalz; Fe(II)-EDTA-Natriumsalz). Vorzugsweise beträgt die Menge der eingesetzten radikalischen Initiatoren, bezogen auf die Gesamtmenge der zu polymerisierenden Monomere, 0,1 bis 2 Gew.-%.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 20 Gew.-%, vorzugsweise 0,1 bis 10 Gew.-% und insbesondere 0,5 bis 5 Gew.-%, bezogen auf die zu polymerisierenden Monomere eingesetzt. Die grenzflächenaktiven Substanzen verbleiben in den erfindungsgemäßen Polymerzubereitungen und bestimmen somit auch deren anwendungstechnischen Eigenschaften.

Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Bevorzugt werden anionische Emulgatoren oder Kombinationen aus wenigstens einem anionischen und einem nichtionischen Emulgator.

Zu den anionischen Emulgatoren zählen Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$).

Bevorzugte anionische Emulgatoren sind Verbindungen der allgemeinen Formel III

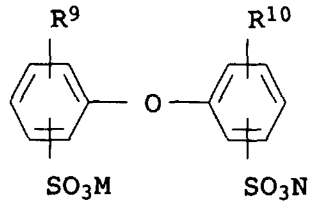

(III),

worin $R^9$ und $R^{10}$ Wasserstoff oder $C_4$- bis $C_{24}$-Alkyl bedeuten und nicht gleichzeitig Wasserstoff sind, und M und N Alkalimetallionen und/oder Ammoniumionen sein können. In der Formel III bedeuten $R^9$ und $R^{10}$ bevorzugt lineare oder verzweigte Alkylreste mit 6 bis 18 C-Atomen oder Wasserstoff, und insbesondere mit 6, 12 oder 16 C-Atomen, wobei $R^9$ und $R^{10}$ nicht beide gleichzeitig Wasserstoff sind. M und N sind bevorzugt Natrium, Kalium oder Ammoniumionen, wobei Natrium besonders bevorzugt ist. Besonders vorteilhaft sind Verbindungen der Formel III in denen M und N Natrium, $R^9$ ein verzweigter Alkylrest mit 12 C-Atomen und $R^{10}$ Wasserstoff oder $R^9$ ist. Häufig werden technische Gemische verwendet, die einen Anteil von 50 bis 90 Gew.-% des monoalkylierten Produktes aufweisen, beispielsweise Dowfax® 2A1 (Warenzeichen der DOW Chemical Company). Die Verbindungen der Formel III sind allgemein bekannt, z.B. aus der US-A 4 269 749, und im Handel erhältlich.

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von Oxoalkoholen und nativen Alkoholen mit einem linearen oder verzweigten $C_{12}$-$C_{18}$-Alkylrest und einem Ethoxilierungsgrad von 8 bis 50.

Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208.

Bei der Polymerisation können Regler eingesetzt werden, z.B. in Mengen bis zu 1 Gew.-%, bezogen auf 100 Gew.-% der zu polymerisierenden Monomere, durch die die Molmasse der Polymere verringert wird. Geeignet sind z.B. Verbindungen mit einer Thiolgruppe wie tert. Butylmercaptan, tert. Dodecylmercaptan, Thioglykolsäure, deren Ester, Mercaptoethanol oder Mercaptopropyltrimethoxysilan.

Die Emulsionspolymerisation erfolgt in der Regel bei 30 bis 130°C, vorzugsweise 50 bis 100 °C. Das Polymerisationsmedium kann sowohl nur aus Wasser, als auch aus Mischungen aus Wasser und damit mischbaren Flüssigkeiten wie Methanol, Ethanol oder Isopropanol bestehen. Vorzugsweise wird nur Wasser verwendet. Die Emulsionspolymerisation kann sowohl als Batchprozeß als auch in Form eines Zulaufverfahrens, einschließlich Stufen oder Gradientenfahrweise, durchgeführt werden. Bevorzugt ist das Zulaufverfahren, bei dem man die Monomeren in reiner oder in emulgierter Form kontinuierlich, stufenweise oder unter Überlagerung eines Konzentrationsgefälles unter Aufrechterhaltung der Polymerisation der Polymerisationszone zuführt. Die einzelnen Komponenten können dem Reaktor beim Zulaufverfahren von oben, in der Seite oder von unten durch den Reaktorboden zugegeben werden.

Bei der Polymerisation kann auch z.B. zur besseren Einstellung der Teilchengröße eine Polymersaat (wässriger Saatlatex) vorgelegt werden. Der Saatlatex weist in der Regel eine gewichtsmittlere Teilchengröße von 10 bis 200 nm und insbesondere 20 bis 100 nm und speziell 25 bis 50 nm auf. Seine konstituierenden Monomere sind beispielsweise Styrol, Methylmethacrylat, n-Butylacrylat und Mischungen davon.

Die Art und Weise, wie der Initiator im Verlauf der radikalischen wäßrigen Emulsionspolymerisation dem Polymerisationsgefäß zugegeben wird, hängt in einer dem Fachmann bekannten Weise von der chemischen Natur des Initiatorsystems als auch von der Polymerisationstemperatur ab. Der Initiator kann sowohl vollständig im Polymerisationsgefäß vorgelegt, als auch nach Maßgabe seines Verbrauchs im Verlauf der radikalischen wäßrigen Emulsionspolymerisation kontinuierlich oder stufenweise als Lösung oder in Substanz zugesetzt werden.

Zur Entfernung der Restmonomere wird üblicherweise im Anschluß an die Polymerisation eine Desodorierung auf physikalischem Wege, z. B. durch Abdestillieren der flüchtigen Monomere mit Wasserdampf, und/oder auf chemischem Wege durchgeführt. Bei der chemischen Desodorierung wird nach Ende der eigentlichen Emulsionspolymerisation, d.h. nach einem Umsatz der Monomeren von mindestens 95 %, weiterer Initiator, z.B. ein Redoxinitiator zugesetzt.

Auf diesem Wege sind wässrige Dispersionen der Polymere A mit Polymergehalten bis zu 70 Gew.-%, bezogen auf das Gesamtgewicht der jeweiligen Polymerisatdispersion, zugänglich. Aus praktischen Gründen werden vorzugsweise Dispersionen der Polymere A mit Polymergehalten im Bereich von 30 bis 60 Gew.-% verwendet. Die Polymerisatteilchen in den Diespersionen des Polymers A weisen in der Regel einen gewichtsmittleren Polymerisatteilchendurchmesser im Bereich von 50 bis 1000 nm (bestimmt mittels Ultrazentrifuge oder Photonenkorrelationsspektroskopie; zur Teilchengrößenbestimmung mittels Ultrazentrifuge siehe z. B. W. Mächtle, Makromolekulare Chemie, 1984, Bd. 185, 1025-1039, W. Mächtle, Angew. Makromolekulare Chemie, 1988, 162, 35-42) auf. Bei Bindemitteldispersionen mit hohen Feststoffgehalten, z. B. > 50 Gew.-%, bezogen auf das Gesamtgewicht der Bindemitteldispersion, ist es aus Gründen der Viskosität von Vorteil, wenn der gewichtsmittlere Teilchendurchmesser der Polymerteilchen in der Dispersion ≥ 150 nm ist. Der mittlere Teilchendurchmesser wird vorzugsweise 600 nm nicht überschreiten.

Bei der Verbindung B handelt es sich in der Regel um niedermolekulare Polyaldehyde, unter denen die Dialdehyde besonders bevorzugt sind. Bevorzugte Verbindungen B sind aliphatische Dialdehyde der allgemeinen Formel II

$$OHC{-}(CH_2)_n{-}CHO \qquad (II)$$

worin n für 0 bis 10 und insbesondere für 0 bis 4 steht, oder ein Derivat davon ist, dessen Aldehydgruppen reversibel geschützt sind, beispielsweise als Halbacetal oder Acetal eines $C_1$-$C_4$-Alkohols. Beispielhaft genannt seien Glyoxal und Glutardialdehyd oder Malondialdehyd bzw. deren Acetale und Halbacetale. Es eignen sich aber auch Verbindungen wie Terephthaldialdehyd. Mit besonderem Vorteil wird Glyoxal verwendet. Geeignete Verbindungen B sind auch Homo- und Cooligoere sowie Homo- und Copolymere ethylenisch ungesättigter Aldehyde, z.B. des Formylstyrols, Acroleins und/ oder des Methacroleins, deren Aldehydgruppen gegebenenfalls reversibel geschützt sind.

In der Regel wird die Menge der Verbindung B in den erfindungsgemäß zur Anwendung kommenden Polymerzubereitungen so gewählt werden, daß das Molverhältnis von Aldehydgruppen in der Verbindung B zu den einpolymerisierten Monomeren M1 im Polymer A im Bereich von 1:10 bis 10:1, vorzugsweise im Bereich von 1:5 bis 2:1 und insbesondere bei etwa 1:1 liegt. Das Gewichtsverhältnis von Polymer A zu Verbindung B liegt in der Regel im Bereich von 5000:1 bis 20:1 und vorzugsweise im Bereich von 1000:1 bis 100:1.

Der pH-Wert der erfindungsgemäßen wäßrigen Polymerisatzubereitungen ist für den von den erfindungsgemäßen wäßrigen Polymerisatzubereitungen umfaßten Wirkmechanismus nicht besonders kritisch. Üblicherweise beträgt er 2 bis 12, vorzugsweise > 7 bis 10.

Selbstverständlich können die erfindungsgemäßen wäßrigen Polymerzubereitungen zum Zwecke ihrer Anwendung mit von ihnen verschiedenen wäßrigen Polymerisatzubereitungen gemischt werden.

Erfindungsgesmäß werden die Zubereitungen aus Polymer A und Verbindung B zur Beschichtung von polyurethanhaltigen Substraten verwendet. Die Zubereitungen können als pigment- und füllstofffreie Zubereitungen, z.B. als Klarlacke, als farblose Dichtungsmassen oder Versiegelungsmassen eingesetzt werden. Derartige Zubereitungen enthalten in der Regel 20 bis 60 Gew.-% wenigstens eines Polymers A, 0,05 bis 5 Gew.-%, bezogen auf das Polymer A, wenigstens einer Verbindung B, 0,1 bis 20 Gew.-% Hilfsstoffe sowie Wasser auf 100 Gew.-%.

In einer anderen Ausführungsform der Erfindung enthalten die Zubereitungen aus Polymer A und Verbindung B wenigstens einen anorganischen Füllstoff und/oder ein anorganisches Pigment. Insbesondere für die Beschichtung von Flachdächern werden derartige Zubereitungen verwendet.

Pigmenthaltige Zubereitungen enthalten in der Regel 40 bis 90 Gew.-% und insbesondere 50 bis 85 Gew.-% nicht flüchtige Bestandteile, d.h. polymere Bestandteile sowie Füllstoffe und Pigmente. Die erfindungsgemäß zur Anwendung kommenden pigmenthaltigen Zubereitungen enthalten:

- 10 bis 50 Gew.-%, vorzugsweise 20 bis 40 Gew.-% wenigstens eines Polymers A
- 0,01 bis 1 Gew.-%, bezogen auf das Polymer A, wenigstens einer Verbindung B
- 10 bis 70 Gew.-%, vorzugsweise 30 bis 65 Gew.-% anorganische Füllstoffe und/oder anorganische Pigmente
- 0,1 bis 20 Gew.-%, vorzugsweise 0,5 bis 10 Gew.-% übliche Hilfsmittel,

und Wasser auf 100 Gew.-%.

Geeignete Füllstoffe sind beispielsweise Alumosilikate, Silikate, Erdalkalicarbonate, vorzugsweise Calciumcarbonat in Form von Calcit oder Kreide, Dolomit sowie Aluminiumsilikate oder Magnesiumsilikate wie Talk.

Ein typisches Pigment ist beispielsweise Titandioxid, vorzugsweise in der Rutilform. Die Beschichtungsmassen können jedoch, insbesondere wenn sie zu dekorativen Zwecken verwendet werden, auch farbige Pigmente, beispielsweise Eisenoxide enthalten.

Zu den üblichen Hilfsmitteln zählen Netzmittel, wie Natrium- oder Kaliumpolyphosphate, Polyacrylsäuren, deren Alkalisalze, Polyvinylalkohole etc. Darüber hinaus enthalten diese Beschichtungsmassen in der Regel Stoffe, die die Viskosität modifizieren, beispielsweise Cellulosederivate, wie Hydroxyethylcellulose, Methylcellulose, Carboxymethylcellulose, weiterhin Polyvinylpyrrolidon, Polyvinylalkohol, Salze von Acrylsäure- und Methacrylsäurepolymeren sowie Assoziativverdicker, z.B. Styrol-MaleinsäureanhydridCopolymere und hydrophob modifizierte Polyetherurethane. Weiterhin können die Polymerzubereitungen Dispergiermittel, Entschäumer, Konservierungs- oder Hydrophobiermittel, Biozide, Farbstoffe und/oder Fasern enthalten. Auch können die Polymerzubereitungen zur Einstellung der Filmbildeeigenschaften der Polymers A Lösungsmittel oder Weichmacher enthalten, z. B. Ethylenglykol, Propylenglykol, Butylenglykol, Hexylenglykol, Diethylenglykolmonoethylether, Diethylenglykolmonoethyl-etheracetat, Diethylenglykolmonobutylether, Hexylenglykoldiacetat, Propylenglykolmonoethylether, -monophenylether, -monobutyl-ether und -monopropylether, Dipropylenglykolmonomethylether, Dipropylenglykolmono-n-butylether, Tripropylenglykolmono-n-butyl-ether, Butoxybutylacetat, ferner Alkylester aliphatischer Mono- und Dicarbonsäuren, z. B. Texanol® der Eastman, oder technische Gemische von Dibutylestern der Bernsteinsäure, Glutarsäure und Adipinsäure. Daneben können die erfindungsgemäßen Zubereitungen als Filmbildhilfsmittel Kohlenwasserstoffe bzw. deren Gemische, mit oder ohne aromatische Bestandteile, z. B. Testbenzine des Siedebereichs 140 bis 210 °C enthalten.

Die erfindungsgemäßen Zubereitungen können zur Herabsetzung der Oberflächenklebrigkeit bis zu 5 Gew.-%, bezogen auf das Polymer A, photoempfindliche Initiatoren enthalten. Geeignete Photoinitiatoren enthalten eine Gruppe, die in der Lage ist, einen Teil des Sonnenlichts zu absorbieren. Die Zubereitung kann den Photoinitiator sowohl in Form einer photoempfindlichen Verbindung als auch in Form eines photoempfindlichen Oligomers oder Polymers als

Additiv enthalten. Ebenso ist es möglich, die photoempfindliche Gruppe chemisch an das Polymer, beispielsweise durch Copolymerisation zu binden. Die Verwendung von Photoinitiatoren in Beschichtungsmassen ist beispielsweise in der EP-A 010 000, der DE-A 4 318 083 oder der EP-A 624 610 beschrieben. Beschichtungsmassen auf der Basis von Polymeren, die photoempfindliche Gruppen enthalten, sind beispielsweise in der US-A 3,429,852, der US-A 3,574,617 oder der US-A 4,148,987 offenbart.

Geeignete photoempfindliche Verbindungen für den genannten Zweck sind Benzophenonderivate, z.B. 4-Methylbenzophenon, 4-Hydroxybenzophenon, 4-Aminobenzophenon, 4-Chlorbenzophenon, 4-Carboxybenzophenon, 4,4'-Dimethylbenzophenon, 4,4'-Dichlorbenzophenon, 4-Carboxymethylbenzophenon, 3-Nitrobenzophenon. Ebenfalls geeignet sind substituierte Phenylketone, z.B. substituierte Phenylacetophenone und ähnliche.

Die erfindungsgemäßen Beschichtungsmassen zeichnen sich durch eine hohe Haftungsfähigkeit auf hydrophoben Substraten, z.B. auf Oberflächen von Formkörpern, Formmassen oder Bauteilen aus Polyurethanen, auf Beschichtungen auf der Basis von Polyurethanen sowie auf Oberflächen fester Polyurethanschäume aus. Zudem haften die erfindungsgemäßen Zubereitungen auch auf der Oberfläche von Bauteilen aus Polyolefinen, wie Polyethylen, Polypropylen, EPM- und/oder EPDM-Kunststoffen. Eine hohe Adhäsion auf den genannten hydrophoben Substraten ist für die erfindungsgemäßen Zubereitungen sowohl im feuchten wie auch im trockenen Zustand gewährleistet. Die Oberfläche der Beschichtungen ist nicht klebrig und zeigt nur eine geringe Neigung zur Schmutzaufnahine. Die Beschichtungen weisen neben einer hohen Reißfestigkeit eine ebenfalls hohe Dehnbarkeit auf. Ihre Neigung zur Aufnahme von Wasser ist gering. Diese Eigenschaften prädestinieren die Zubereitungen aus Polymer A und Verbindung B insbesondere als Beschichtungsmassen für Aussenanwendungen im Bautenschutz, beispielsweise für die Beschichtung von Flachdachkonstruktionen, die eine Isolierschicht aus Polyurethanschaum aufweisen oder die aus Platten oder sonstigen Konstruktionselementen aus Polyurethanschäumen aufgebaut sind.

Da es sich bei den erfindungsgemäßen Zubereitungen in der Regel um fließfähige Zubereitungen handelt, können sie in konventioneller Weise, beispielsweise mit Pinseln oder Rollen, Bürsten, Rakeln oder Spritzvorrichtungen oder durch Gießen auf das zu beschichtende Substrat aufgebracht werden.

Die im folgenden angegebenen Beispiele sollen die Erfindung verdeutlichen, ohne sie jedoch einzuschränken.

1. Herstellung und Charakterisierung der Polymerisatdispersionen

Die Teilchengröße (Z-Mittelwert) der Polymerisatteilchen wurde durch dynamische Lichtstreuung an einer 0,01 gew.-%igen Dispersion bei 23°C mittels eines Autosizer IIc der Fa. Malvern Instruments, England, ermittelt. Angegeben wird der mittlere Durchmesser der Kumulantenauswertung (cumulant z-average) der gemessenen Autokorrelationstunktion.

Dispersion D1

In einem Gefäß mit Rührer wurden 200 g entionisiertes Wasser, 10,2 g Polystyrollatex (33 gew.-%ig) und 1 mg Na-Fe-EDTA-Komplexvorgelegt. Anschließend spülte man mit Inertgas und erwärmt auf 90°C. Bei Erreichen der Temperatur gab man gleichzeitig beginnend innerhalb 2,5 h die Monomeremulsion und die Initiatorlösung über getrennnte zuläufe in das Polymerisationsgefäß. Anschließend ließ man bei 90°C eine Stunde nachreagieren und kühlte auf 70°C ab. Danach gab man zur Verringerung des Restmonomerengehaltes 6,1 g einer 12,3 gew.-%igen, wäßrigen Lösung von tert.-Butylhydroperoxid und 9,2 g einer 7,4 gew.-%igen, wäßrigen Lösung des Bisulfitadduktes von Aceton zu und ließ 30 min. bei 70°C nachreagieren. Man ließ auf Raumtemperatur abkühlen und stellte den pH-Wert mit 10%iger Natronlauge auf 9,0 ein. Die erhaltene Dispersion wies einen Feststoffgehalt von 56 Gew.-% auf. Der mittlere Teilchendurchmesser betrug 250 nm. Die Glasübergangstemperatur des Polymeren betrug -28 °C.

Monomeremulsion:

| | |
|---|---|
| 255,0 g | Wasser |
| 16,7 g | Dowfax® 2A1 (45 Gew.-%ige Lösung in Wasser) |
| 93,8 g | eines ethoxylierten $C_{16}$-$C_{18}$-Fettalkohols mit einem mittleren Ethoxylierungsgrad von 18 (20 Gew.-%ige Lösung in Wasser) |
| 133,1 g | 2-Ethylhexylacrylat |
| 487,5 g | n-Butylacrylat |
| 61,9 g | Methylmethacrylat |
| 15,0 g | Methacrylsäure, |
| 67,5 g | einer 25 gew.-%igen Lösung von N-(Methacryloyloxyethyl)-imidazolidin-1-on in Methylmethacrylat. |

Initiatorlösung:

| | |
|---|---|
| 2,25 g | Natriumperoxodisulfat in 50 g Wasser. |

Dispersion D2

Gemäß der für die Dispersion D1 angegebenen Herstellungsvorschrift wurde eine Dispersion D2 mit veränderter Monomerzusammensetzung hergestellt. Der pH-Wert der Dispersion wurde mit 10%iger Natronlauge auf 8,5 eingestellt. Die erhaltene Dispersion wies einen Feststoffgehalt von 56,4 Gew.-% auf. Der mittlere Teilchendurchmesser betrug 245 nm, und die Glasübergangstemperatur -30 °C.

Monomeremulsion:

| | |
|---|---|
| 255,0 g | Wasser |
| 16,7 g | Dowfax® 2A1 (45 Gew.-%ige Lösung in Wasser) |
| 93,8 g | eines ethoxylierten $C_{16}$-$C_{18}$-Fettalkohols mit einem mittleren Ethoxylierungsgrad von 18 (20 Gew.-%ige Lösung in Wasser) |
| 136,9 g | 2-Ethylhexylacrylat |
| 487,5 g | n-Butylacrylat |
| 73,2 g | Methylmethacrylat |
| 15,0 g | Methacrylsäure, |
| 52,2 g | einer 25 gew.-%igen Lösung von N-(Methacryloyloxyethyl)-imidazolidin-1-on in Methylmethacrylat. |

Dispersion D1a und D2a (erfindungsgemäß):

Dispersion D1 wurde mit einer 40 gew.-%igen, wässrigen Glyoxal-Lösung versetzt, so daß der Gehalt von Glyoxal, bezogen auf das Polymer in der Dispersion bei 0,33 Gew.-% lag. Analog wurde der Glyoxalgehalt in der Dispersion D2 auf 0,26 Gew.-% (bezogen auf Polymer) eingestellt.

2. Herstellung pigmenthaltiger Zubereitungen

Die Herstellung der pignenthaltigen Zubereitungen erfolgte durch Abmischen der im folgenden angegebenen Komponenten in der angegebenen Reihenfolge mit den Dispersionen D1, D1a und D2a in einem Dissolver.

| | |
|---|---|
| Dispersion (55%ig) | 32,2 Teile |
| Entschäumer[1] | 0,5 Teile |
| Propylenglykol | 2,3 Teile |
| Dispergiermittel[2] | 0,5 Teile |
| Titanpigment (Rutil, 0,3 µm) | 11,5 Teile |
| Calciumcarbonat (10 µm) | 27,0 Teile |
| Calciumcarbonat (2 µm) | 1,4 Teile |
| Talk (6 µm) | 8,5 Teile |
| handelsübliches Biozid[3] | 0,2 Teile |
| Dispersion (55%ig) | 14,0 Teile |
| Entschäumer[1] | 0,5 Teile |
| Wasser | 1,5 Teile |

[1] Entschäumer BYK 035 (BYK Chemie, Wallingford CT, USA)
[2] Dispergiermittel Calgon® TK, BK-Ladenburg Gmbh, Deutschland
[3] 1,2-Benzoisothiazolin-3-on

3. Haftungstest

Blöcke aus handelsüblichem Polyurethanschaum für Dachkonstruktionen (roof grade 3 lb/cubic feet) der American Coatings of Greensboro (Greensboro, North Carolina) wurden auf einer Fläche > 25,4 mm x 250 mm mit den Beschichtungsmassen aus 2. beschichtet. Anschließend wurde ein Glasfasergewebe mit den Abmessungen 25,4 mm x 250 mm längs über die bestrichene Fläche gelegt. Nach 4 h bei Raumtemperatur wurde auf das Glasfasergewebe eine weitere Beschichtung mit den erfindungsgemäßen Beschichtungsmassen aufgebracht und 14 Tage bei Raumtemperatur getrocknet. Anschließend wurde die Beschichtung durch Ziehen an dem Glasfaserstreifen entfernt. Es wird beurteilt, ob die Oberfläche des Polyurethanschaums beim Entfernen zerstört wird (kohäsiver Bruch) oder unzerstört bleibt (adhäsiver Bruch). Zur Bestimmung der Naßhaftung wurde der Probekörper 14 Tage mit der beschichteten Fläche in Wasser getaucht und dann getestet. Die Ergebnisse sind in Tabelle 1 zusammengefaßt.

4. Reißfestigkeit und Dehnbarkeit

Die Beschichtungsmassen wurden mit einem Rakel auf einer mit Teflon beschichteten Oberfläche so aufgetragen, daß nach dem Trocknen eine Schichtdicke von 0,3 bis 0,4 mm erhalten wurde. Nach 4 h Trocknen an der Luft wurde eine weitere Schicht in gleicher Stärke aufgebracht. Nach 1 bis 2 Tagen entfernte man den Film sorgfältig von der Teflonoberfläche und beließ ihn senkrecht hängend 14 Tage bei 23°C und 50% Luftfeuchtigkeit.

Die Bestimmung von Reißkraft und Reißdehnung erfolgte mit einem Instron-Tensile Tester in Anlehnung an die DIN 53 455 und die DIN 53 504. Die angegebenen Meßwerte sind jeweils Mittelwerte aus 5 Messungen an 5 Prüfkörpern. Diese wurden aus den Filmen herausgestanzt. Als Probenkörperformat wurde das in DIN 53 504 als Normstab S2 beschriebene Hantelformat angewendet. Die Dicke der Proben wurde mit einem Dickemeßgeräte nach DIN 53 370 mit kreisförmiger Tastenform von 10 mm Durchmesser überprüft. Die Probenkörper wurden in die Klammern einer Zugprüfmaschine eingespannt und mit einer Zuggeschwindigkeit von 5 mm/Minute gerissen. Die Reißdehnung ist die Dehnung im Augenblick des Reißens. Sie bezieht sich auf 23°C und 1 atm. Ihre Angabe erfolgt als $[(l-l_0)/l_0] \times 100$ (%). Dabei bedeuten: $l_0$ = ursprüngliche Meßlänge, l = Meßlänge beim Reißen. Entsprechend ist die Reißkraft die im Augenblick des Reißens anzuwendende Kraft. Sie wird üblicherweise auf den Querschnitt bezogen angegeben. Die Ergebnisse sind in Tabelle 1 zusammengefaßt.

5. Bestimmung der Wasseraufnahme

Die nach 4. hergestellten Filme wurden gewogen, in Wasser gelegt, nach 96 h abgetrocknet und erneut gewogen. Die prozentuale Gewichtszunahme ist ein Maß für die Wasseraufnahme (Tabelle 1).

6. Bestimmung der Oberflächen-Klebrigkeit

Die Bestimmung der Oberflächenklebrigkeit von Beschichtungen, die analog den Beschichtungen für den Haftfestigkeits-Test (siehe 3.) hergestellt wurden, erfolgte nach der "Finger-Test"-Methode. Die Ergebnisse sind in Tabelle 1 zusammengestellt.

Tabelle 1

| Beispiele | UMA/Glyoxal[1] (Gew.-%/ Gew.-%) | Haftung auf PU-Schaum[2] | | Reißkraft ($N/mm^2$) | Reißdehnung (%) | Wasseraufnahme (%) | Oberflächenklebrigkeit |
|---|---|---|---|---|---|---|---|
| | | trocken | naß | | | | |
| V 2 | 2,25/0 | 0 | 0 | 0,60 | 350 | 11,9 | klebrig |
| B 1 | 2,25/0,33 | 1 | 1 | 1,3 | 160 | 5,8 | nicht klebrig |
| B 2 | 1,75/0,26 | 1 | 1 | 1,2 | 150 | 6,5 | nicht klebrig |

1 UMA = N-(2-Methacryloyloxyethyl)imidazolidin-1-on; Gew.-% bezogen auf 100 Gew.-% Monomere

2 0: adhäsiver Bruch

1: kohäsiver Bruch, Reißen des Glasfasergewebes

**Patentansprüche**

1. Verwendung von wässrigen Zubereitungen, enthaltend:

   i) wenigstens ein filmbildendes Polymer A, aufgebaut aus ethylenisch ungesättigten Monomeren M, das in der wässrigen Zubereitung in dispers verteilter Form vorliegt, wobei die Monomere M wenigstens ein Monomer M1 der allgemeinen Formel I

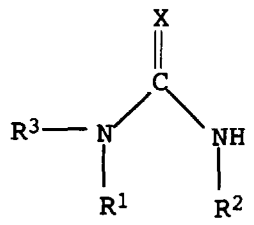

(I)

   worin

   | | |
   |---|---|
   | $R^1$ und $R^2$ | unabhängig voneinander für Wasserstoff, lineares oder verzweigtes $C_1$-$C_5$-Alkyl stehen oder gemeinsam eine $C_2$-$C_4$-Alkylengruppe bedeuten, die gegebenenfalls ein- oder zweifach mit $C_1$-$C_5$-Alkyl, $C_1$-$C_4$-Alkyloxy und/oder Hydroxy substituiert ist, |
   | X | für Sauerstoff oder Schwefel steht, und |
   | $R^3$ | für einen monoethylenisch ungesättigten Rest mit 2 bis 20 C-Atomen steht, |

   und wenigstens ein damit copolymerisierbares Monomer M2 umfassen, und
   ii) wenigstens eine Verbindung B, die zwei oder mehrere Aldehydgruppen aufweist,

   zur Beschichtung von Substraten auf der Basis von Polyurethanen.

2. Verwendung nach Anspruch 1, wobei das zu beschichtende Substrat ein Polyurethanschaum ist.

3. Verwendung nach Anspruch 1 oder 2, wobei das Polymer A eine Glasübergangstemperatur $T_g$ im Bereich von -40 bis +20 °C aufweist.

4. Verwendung nach einem der vorhergehenden Ansprüche, wobei die Monomere M1 0,1 bis 10 Gew.-%, bezogen auf das Gesamtgewicht der einpolymerisierten Monomere M, ausmachen.

5. Verwendung nach einem der vorhergehenden Ansprüche, wobei das Molverhältnis der Aldehydgruppen der Verbindung B zu den in Polymer A einpolymerisierten Monomeren M1 im Bereich von 10:1 bis 1:10 liegt.

6. Verwendung nach einem der vorhergehenden Ansprüche, wobei die Verbindung B ein aliphatischer Dialdehyd der allgemeinen Formel II

   $$OHC\!-\!(CH_2)_n\!-\!CHO \qquad (II)$$

   worin n für 0 bis 10 und insbesondere für 0 bis 4 steht, oder ein Derivat davon ist, dessen Aldehydgruppen reversibel geschützt sind.

7. Verwendung nach einem der vorhergehenden Ansprüche, wobei das Monomer M1 ausgewählt ist unter N-(2-Methacryloyloxyethyl)imidazolin-2-on, N-(2-Methacrylamidoethyl)imidazolin-2-on und N-[(3-Allyloxy-2-hydroxypropyl)aminoethyl]imidazolin-2-on.

8. Verwendung nach einem der vorhergehenden Ansprüche, wobei die Monomere M2 ausgewählt sind unter den $C_1$-$C_{12}$-Alkylestern und den $C_5$-$C_{10}$-Cycloalkylestern der Acrylsäure und der Methacrylsäure.

**9.** Verwendung nach einem der vorhergehenden Ansprüche, wobei die Monomere M wenigstens ein monoethylenisch ungesättigtes Monomer M3, das eine Säurefunktion aufweist, oder ein Salz davon umfassen.

**10.** Verwendung nach einem der vorhergehenden Ansprüche, wobei die wässrige Zubereitung

| | |
|---|---|
| 10 bis 50 Gew.-% | wenigstens eines Polymers A |
| 0,05 bis 5 Gew.-% | bezogen auf das Polymer A, wenigstens einer Verbindung B |
| 10 bis 70 Gew.-% | anorganische Füllstoffe und/oder anorganische Pigmente |
| 0,1 bis 20 Gew.-% | übliche Hilfsmittel |

und Wasser auf 100 Gew.-% enthält.

**11.** Verfahren zum Beschichten hydrophober Substrate auf der Basis von Polyurethanen, wobei man eine Zubereitung aus einem der Ansprüche 1 bis 10 auf das zu beschichtende Substrat aufbringt.

**12.** Wässrige Zubereitung, wie in einem der Ansprüche 1 bis 10 definiert enthaltend:

| | |
|---|---|
| 10 bis 50 Gew.-% | wenigstens eines Polymers A |
| 0,05 bis 5 Gew.-% | bezogen auf das Polymer A, wenigstens einer Verbindung B |
| 10 bis 70 Gew.-% | anorganische Füllstoffe und/oder anorganische Pigmente |
| 0,1 bis 20 Gew.-% | übliche Hilfsmittel |

und Wasser auf 100 Gew.-%,
worin das Polymer A aufgebaut ist aus ethylenisch ungesättigten Monomeren M, umfassend:

| | |
|---|---|
| 70 bis 95 Gew.-% | n-Butylacrylat, 2-Ethylhexylacrylat und deren Mischungen |
| 5 bis 25 Gew.-% | Styrol, Methylmethacrylat, tert. Butylmethacrylat und deren Mischungen |
| 0,1 bis 5 Gew.-% | wenigstens eines Monomers M1 und |
| 0,1 bis 5 Gew.-% | wenigstens eines Monomers M3. |

Europäisches Patentamt

# EUROPÄISCHER RECHERCHENBERICHT

Nummer der Anmeldung
EP 99 11 3156

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DATABASE WPI<br>Week 8207<br>Derwent Publications Ltd., London, GB;<br>AN 82-13028e<br>XP002120502<br>& JP 54 021021 A (HOSHI),<br>16. Februar 1979 (1979-02-16)<br>* Zusammenfassung *<br>----- | 1 | C08L57/12<br>C08J7/04<br>C09D157/12<br>C08J9/36 |
| | | | **RECHERCHIERTE SACHGEBIETE (Int.Cl.7)** |
| | | | C08L<br>C08J<br>C09D<br>C08F |

Der vorliegende Recherchenbericht wurde für alle Patentansprüche erstellt

| Recherchenort | Abschlußdatum der Recherche | Prüfer |
|---|---|---|
| DEN HAAG | 27. Oktober 1999 | Schueler, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 99 11 3156

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-10-1999

| Im Recherchenbericht angeführtes Patentdokument | Datum der Veröffentlichung | Mitglied(er) der Patentfamilie | Datum der Veröffentlichung |
|---|---|---|---|
| JP 54021021 A | 16-02-1979 | JP 1111041 C | 31-08-1982 |
| | | JP 57003777 B | 22-01-1982 |

EPO FORM P0461

Für nähere Einzelheiten zu diesem Anhang : siehe Amtsblatt des Europäischen Patentamts, Nr.12/82